(19) Europäisches Patentamt
European Patent Office
Office européen des brevets

(11) EP 2 411 670 B1

(12) **EUROPÄISCHE PATENTSCHRIFT**

(45) Veröffentlichungstag und Bekanntmachung des Hinweises auf die Patenterteilung:
**25.09.2013 Patentblatt 2013/39**

(21) Anmeldenummer: **10717019.3**

(22) Anmeldetag: **25.03.2010**

(51) Int Cl.:
***F03D 11/02*** *(2006.01)* ***H02K 7/116*** *(2006.01)*

(86) Internationale Anmeldenummer:
**PCT/AT2010/000086**

(87) Internationale Veröffentlichungsnummer:
**WO 2010/108207 (30.09.2010 Gazette 2010/39)**

# (54) ENERGIEGEWINNUNGSANLAGE, INSBESONDERE WINDKRAFTANLAGE

ENERGY PRODUCTION PLANT, IN PARTICULAR A WIND POWER STATION

DISPOSITIF DE PRODUCTION D'ÉNERGIE, NOTAMMENT ÉOLIENNE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.03.2009 AT 4892009**

(43) Veröffentlichungstag der Anmeldung:
**01.02.2012 Patentblatt 2012/05**

(73) Patentinhaber: **Hehenberger, Gerald**
**9020 Klagenfurt (AT)**

(72) Erfinder: **Hehenberger, Gerald**
**9020 Klagenfurt (AT)**

(74) Vertreter: **Beer & Partner Patentanwälte KG**
**Lindengasse 8**
**1070 Wien (AT)**

(56) Entgegenhaltungen:
**EP-A1- 1 283 359** **EP-A2- 1 895 157**
**WO-A1-81/01444**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Energiegewinnungsanlage, insbesondere Windkraftanlage, mit einer Antriebswelle, einem Generator und mit einem Differenzialgetriebe mit drei An- bzw. Abtrieben, wobei ein erster Antrieb mit der Antriebswelle, ein Abtrieb mit einem Generator und ein zweiter Antrieb mit einem Differenzial-Antrieb verbunden ist, wobei das Differenzialgetriebe ein Planetengetriebe mit Planetenrädern ist.

Windkraftwerke gewinnen zunehmend an Bedeutung als Elektrizitätserzeugungsanlagen. Dadurch erhöht sich kontinuierlich der prozentuale Anteil der Stromerzeugung durch Wind. Dies wiederum bedingt einerseits neue Standards bezüglich Stromqualität und andererseits einen Trend zu noch größeren Windkraftanlagen. Gleichzeitig ist ein Trend Richtung Offshore-Windkraftanlagen erkennbar, welcher Anlagengrößen von zumindest 5MW installierter Leistung fordert. Durch die hohen Kosten für Infrastruktur und Wartung bzw. Instandhaltung der Windkraftanlagen im Offshore-Bereich gewinnen hier sowohl Wirkungsgrad als auch Herstellkosten der Anlagen, mit dem damit zusammenhängenden Einsatz von Mittelspannungs-Synchrongeneratoren, eine besondere Bedeutung.

Die WO2004/109157 A1 zeigt ein komplexes, hydrostatisches "Mehrwege"-Konzept mit mehreren parallelen Differenzialstufen und mehreren schaltbaren Kupplungen, wodurch zwischen den einzelnen Wegen geschaltet werden kann. Mit der gezeigten technischen Lösung können die Leistung und somit die Verluste der Hydrostatik reduziert werden. Ein wesentlicher Nachteil ist jedoch der komplizierte Aufbau der gesamten Einheit. Darüber hinaus stellt die Schaltung zwischen den einzelnen Stufen ein Problem bei der Regelung der Windkraftanlage dar.

EP 1283359 A1 zeigt ein 1-stufiges und ein mehrstufiges Differenzialgetriebe mit elektrischem Differenzial-Antrieb, wobei die 1-stufige Version eine um die Eingangswelle koaxial positionierte Sonder-Drehstrommaschine mit hoher Nenndrehzahl aufweist, welche aufgrund der Bauform ein extrem hohes auf die Rotorwelle bezogenes Massenträgheitsmoment hat. Alternativ wird ein mehrstufiges Differenzialgetriebe mit schnelllaufender Standard-Drehstrommaschine vorgeschlagen, welche parallel zur Eingangswelle des Differenzialgetriebes ausgerichtet ist.

Diese technischen Lösungen erlauben zwar den direkten Anschluss von Mittelspannungs-Synchrongeneratoren ans Netz (d.h. ohne Einsatz von Frequenzumrichtern), die Nachteile bekannter Ausführungen sind jedoch einerseits hohe Verluste im Differenzial-Antrieb bzw. andererseits bei Konzepten die dieses Problem lösen, komplexe Mechanik bzw. Sonder-Elektromaschinenbau und damit hohe Kosten. Generell ist festzustellen, dass kostenrelevante Kriterien, wie z.B. optimale Regelung und Größe des Differenzial-Antriebes, nicht ausreichend berücksichtigt wurden.

Aufgabe der Erfindung ist oben genannte Nachteile weitgehend zu vermeiden und eine Energiegewinnungsanlage zur Verfügung zu stellen, welche neben geringstmöglichen Kosten auch minimale Baugröße des Differenzial-Antriebes gewährleistet.

Gelöst wird diese Aufgabe erfindungsgemäß dadurch, dass die Planetenräder jeweils zwei Zahnräder aufweisen, welche miteinander drehfest verbunden sind und unterschiedliche Teilkreisdurchmesser aufweisen.

Dadurch ist eine sehr kompakte und effiziente Bauweise der Anlage möglich, mit der darüber hinaus auch die regelungstechnischen Aspekte für die Energieerzeugungsanlage, insbesondere Windkraftanlage, optimal gelöst werden.

Bevorzugte Ausführungsformen der Erfindung sind Gegenstand der übrigen Unteransprüche.

Nachfolgend werden bevorzugte Ausführungsformen der Erfindung unter Bezugnahme auf die angeschlossenen Zeichnungen detailliert beschrieben.

Fig. 1 zeigt für eine 5MW Windkraftanlage gemäß Stand der Technik die Leistungskurve, die Rotordrehzahl und die sich dadurch ergebenden Kennwerte wie Schnelllaufzahl und den Leistungsbeiwert,

Fig. 2 zeigt das Prinzip eines Differenzialgetriebes mit einem elektrischen Differenzial-Antrieb gemäß Stand der Technik,

Fig. 3 zeigt das Prinzip eines hydrostatischen Differenzial-Antriebes mit Pumpen/Motor-Kombination gemäß Stand der Technik,

Fig. 4 zeigt die Drehzahlverhältnisse am Rotor der Windkraftanlage und die sich dadurch ergebenden maximalen Eingangs-Drehmomente $M_{max}$ für den Differenzial-Antrieb,

Fig. 5 zeigt beispielhaft gemäß Stand der Technik die Drehzahl- und Leistungsverhältnisse eines elektrischen Differenzial-Antriebes über der Windgeschwindigkeit,

Fig. 6 zeigt die Drehmoment/Drehzahl-Kennlinie eines Differenzial-Antriebes im Teillastbereich und im Nennlastbereich für zwei verschiedene Betriebsarten,

Fig. 7 zeigt das maximal erlaubte Massenträgheitsmoment des Differenzial-Antriebes für einen Applikationsfaktor von $f_A$ = 0,2, und den Vergleich des typischen Verhältnisses von Massenträgheitsmoment zu Nennmoment von hochdynamischen Servoantrieben gemäß Stand der Technik bzw. Differenzial-Antrieben gemäß vorliegender Erfindung,

Fig. 8 zeigt den Einfluss des Massenträgheitsmomentes des Differenzial-Antriebes und der Steigung der Drehmomentkennlinie auf das Regelungsverhalten der Windkraftanlage,

Fig. 9 zeigt eine mögliche Ausführungsvariante einer Differenzialstufe im Zusammenhang mit vorliegender Erfindung,

Fig. 10 zeigt eine erfindungsgemäße Variante einer Differenzialstufe mit Stufenplanet.

Die Leistung des Rotors einer Windkraftanlage errechnet sich aus der Formel

$$\text{Rotor-Leistung} = \text{Rotorfläche} * \text{Leistungsbeiwert} * \text{Windgeschwindigkeit}^3 * \text{Luftdichte} / 2$$

wobei der Leistungsbeiwert abhängig von der Schnelllaufzahl (= Verhältnis Blattspitzen-Geschwindigkeit zu Windgeschwindigkeit) des Rotors der Windkraftanlage ist. Der Rotor einer Windkraftanlage ist für einen optimalen Leistungsbeiwert basierend auf einer im Zuge der Entwicklung festzulegenden Schnelllaufzahl (meist ein Wert zw. 7 und 9) ausgelegt. Aus diesem Grund ist beim Betrieb der Windkraftanlage im Teillastbereich eine entsprechend kleine Drehzahl einzustellen, um einen optimalen aerodynamischen Wirkungsgrad zu gewährleisten.

Fig. 1 zeigt die Verhältnisse für Rotorleistung, Rotordrehzahl, Schnelllaufzahl und Leistungsbeiwert für einen vorgegebenen maximalen Drehzahlbereich des Rotors bzw. einer optimalen Schnelllaufzahl von 8,0-8,5. Aus dem Diagramm ist ersichtlich, dass sobald die Schnelllaufzahl von ihrem optimalen Wert von 8,0-8,5 abweicht, der Leistungsbeiwert sinkt, und sich damit gemäß oben genannter Formel die Rotorleistung entsprechend der aerodynamischen Charakteristik des Rotors reduziert.

Fig. 2 zeigt ein mögliches Prinzip eines Differenzialsystems für eine Windkraftanlage bestehend aus Differenzialstufe 3 bzw. 11 bis 13, einer Anpassungs-Getriebestufe 4 und einem elektrischen Differenzial-Antrieb 6. Der Rotor 1 der Windkraftanlage, der auf der Antriebswelle für das Hauptgetriebe 2 sitzt, treibt das Hauptgetriebe 2 an. Das Hauptgetriebe 2 ist ein 3-stufiges Getriebe mit zwei Planetenstufen und einer Stirnradstufe. Zwischen Hauptgetriebe 2 und Generator 8 befindet sich die Differenzialstufe 3, welche vom Hauptgetriebe 2 über Planetenträger 12 der Differenzialstufe 3 angetrieben wird. Der Generator 8 - vorzugsweise ein fremderregter Synchrongenerator, der bei Bedarf auch eine Nennspannung größer 20kV haben kann - ist mit dem Hohlrad 13 der Differenzialstufe 3 verbunden und wird von diesem angetrieben. Das Ritzel 11 der Differenzialstufe 3 ist mit dem Differenzial-Antrieb 6 verbunden. Die Drehzahl des Differenzial-Antriebes 6 wird geregelt, um einerseits bei variabler Drehzahl des Rotors 1 eine konstante Drehzahl des Generators 8 zu gewährleisten und andererseits das Drehmoment im kompletten Triebstrang der Windkraftanlage zu regeln. Um die Eingangsdrehzahl für den Differenzial-Antrieb 6 zu erhöhen wird im gezeigten Fall ein 2-stufiges Differenzialgetriebe gewählt, welches eine Anpassungs-Getriebestufe 4 in Form einer Stirnradstufe zwischen Differenzialstufe 3 und Differenzial-Antrieb 6 vorsieht. Differenzialstufe 3 und Anpassungs-Getriebestufe 4 bilden somit das 2-stufige Differenzialgetriebe. Der Differenzial-Antrieb ist eine Drehstrommaschine, welche über Frequenzumrichter 7 und Transformator 5 ans Netz angeschlossen wird. Alternativ kann der Differenzial-Antrieb, wie in Fig. 3 gezeigt, auch als z.B. hydrostatische Pumpen/Motor-Kombination 9 ausgeführt werden. In diesem Fall ist die zweite Pumpe vorzugsweise über Anpassungs-Getriebestufe 10 mit der Antriebswelle des Generators 8 verbunden.

Die Drehzahlgleichung für das Differenzialgetriebe lautet:

$$\text{Drehzahl}_{\text{Generator}} = x * \text{Drehzahl}_{\text{Rotor}} + y * \text{Drehzahl}_{\text{Differenzial-Antrieb}},$$

wobei die Generatordrehzahl konstant ist, und sich die Faktoren x und y aus den gewählten Getriebeübersetzungen von Hauptgetriebe und Differenzialgetriebe ableiten lassen. Das Drehmoment am Rotor wird durch das anstehende Windangebot und den aerodynamischen Wirkungsgrad des Rotors bestimmt. Das Verhältnis zwischen dem Drehmoment an der Rotorwelle und dem am Differenzial-Antrieb ist konstant, wodurch sich das Drehmoment im Triebstrang durch den Differenzial-Antrieb regeln lässt. Die Drehmomentgleichung für den Differenzial-Antrieb lautet:

$$\text{Drehmoment}_{\text{Differenzial-Antrieb}} = \text{Drehmoment}_{\text{Rotor}} * y / x ,$$

wobei der Größenfaktor y/x ein Maß für das notwendige Auslegungs-Drehmoment des Differenzial-Antriebes ist.

Die Leistung des Differenzial-Antriebes ist im Wesentlichen proportional dem Produkt aus prozentueller Abweichung der Rotordrehzahl von dessen Grunddrehzahl mal Rotor-Leistung. Dementsprechend erfordert ein großer Drehzahlbereich grundsätzlich eine entsprechend große Dimensionierung des Differenzial-Antriebes. Bei elektrischen und hydrostatischen Differenzial-Antrieben mit einer Differenzialstufe ist die Grunddrehzahl jene Drehzahl des Rotors, bei der der Differenzial-Antrieb still steht, d.h. die Drehzahl gleich Null hat.

Fig. 4 zeigt dies gemäß Stand der Technik beispielhaft für verschiedene Drehzahlbereiche. Der -/+Nenn-Drehzahlbereich des Rotors definiert dessen prozentuelle Drehzahlabweichung von der Grunddrehzahl des Rotors, der mit Nenndrehzahl des Differenzial-Antriebs (- ... motorisch bzw. + ... generatorisch) ohne Feldschwächung realisiert werden kann. Die Nenndrehzahl (n) des Differenzial-Antriebes definiert im Falle einer elektrischen Drehstrommaschine jene maximale Drehzahl, bei der diese dauerhaft das Nenndrehmoment ($M_n$) bzw. die Nennleistung ($P_n$) erbringen kann.

Im Falle eines hydrostatischen Antriebes, wie z.B. einer hydraulischen Axialkolbenpumpe, ist die Nenndrehzahl des Differenzial-Antriebes jene Drehzahl, bei der dieser mit maximalem Drehmoment ($T_{max}$) maximale Dauerleistung ($P_{0\ max}$) liefern kann. Dabei bestimmen Nenndruck ($p_N$) und Nenngröße (NG) bzw. Verdrängungsvolumen ($V_{g\ max}$) der Pumpe das maximale Drehmoment ($T_{max}$).

Im Nennleistungsbereich dreht der Rotor der Windkraftanlage mit der mittleren Drehzahl $n_{rated}$ zwischen den Grenzen $n_{max}$ und $n_{min-maxP}$, im Teillastbereich zwischen $n_{rated}$ und $n_{min}$, in diesem Beispiel erzielbar mit einem Feldschwächebereich von 80%. Der Regelungs- Drehzahlbereich zwischen $n_{max}$ und $n_{min-maxP}$, welcher ohne Lastreduktion realisierbar ist, wird entsprechen groß gewählt, um Windböen ausregeln zu können. Die Größe dieses Drehzahlbereiches hängt von der Böigkeit des Windes bzw. der Massenträgheit des Rotors der Windkraftanlage und der Dynamik des sog. Pitch- Systems (Rotorblatt- Verstellsystem) ab, und liegt üblicherweise bei etwa- / +5%. Im gezeigten Beispiel wurde ein Regelungs- Drehzahlbereich von- / +6% gewählt um entsprechende Reserven für die Ausregelung von Extremböen mit Hilfe von Differenzial- Antrieben zu haben. Windkraftanlagen mit sehr trägen Pitch- Systemen können aber durchaus auch für größere Regelungs- Drehzahlbereiche ausgelegt werden. In diesem Regelungs- Drehzahlbereich muss die Windkraftanlage Nennleistung produzieren, was bedeutet, dass der Differenzial- Antrieb dabei mit maximalem Drehmoment belastet wird. Das heißt, dass der- /+Nenn- Drehzahlbereich des Rotors etwa gleich groß sein muss, da nur in diesem Bereich der Differenzial- Antrieb sein Nenndrehmoment leisten kann.

Da nun bei kleinen Rotor-Drehzahlbereichen die Grunddrehzahl über $n_{min-maxP}$ liegt, muss der Differenzial-Antrieb das Nenndrehmoment bei Drehzahl gleich Null erbringen können. Differenzial-Antriebe, sei es elektrisch oder auch hydraulisch, sind jedoch für Drehzahl gleich Null nur für das sogenannte Stillstandsmoment ausgelegt, welches deutlich unter dem Nennmoment liegt, was jedoch durch eine entsprechende Überdimensionierung bei der Auslegung kompensiert werden kann. Da jedoch das maximale Auslegungs-Drehmoment der dimensionierende Faktor für einen Differenzial-Antrieb ist, wirkt sich aus diesem Grund ein kleiner Drehzahlbereich nur beschränkt positiv auf die Größe des Differenzial-Antriebes aus. Dies erkennt man auch an der Kurve $M_{max}$, welche das maximal zu erbringende Drehmoment des Differenzial-Antriebes in Abhängigkeit vom Nenn-Drehzahlbereich darstellt. Basis hierfür sind der Einsatz eines einstufigen Differenzialgetriebes mit einer angenommenen maximalen Standübersetzung von $i_{0Z}$ = -6, konstante Leistungs-Regelung im Nennlastbereich und ein 4-poliger Synchrongenerator mit einer Synchrondrehzahl von 1500 $min^{-1}$.

In Fig. 5 sieht man beispielhaft die Drehzahl- bzw. Leistungsverhältnisse für eine Differenzials-tufe gemäß Stand der Technik. Die Drehzahl des Generators, vorzugsweise ein fremderregter Mittelspannungs-Synchrongenerator ist durch den Anschluss an das frequenzfeste Stromnetz konstant. Um den Differenzial-Antrieb entsprechend gut ausnutzen zu können, wird dieser Antrieb im Bereich kleiner der Grunddrehzahl motorisch und im Bereich größer der Grunddrehzahl generatorisch betrieben. Das führt dazu, dass im motorischen Bereich Leistung in die Differenzialstufe eingespeist wird und im generatorischen Bereich Leistung der Differenzialstufe entnommen wird. Diese Leistung wird im Falle eines elektrischen Differenzial-Antriebes vorzugsweise dem Netz entnommen bzw. in dieses eingespeist. Im Falle eines hydraulischen Differenzial-Antriebes wird die Leistung vorzugsweise der Generatorwelle entnommen bzw. dieser zugeführt. Die Summe aus Generatorleistung und Leistung des Differenzial-Antriebes ergibt die für eine Windkraftanlage mit elektrischem Differenzial-Antrieb ins Netz abgegebene Gesamtleistung.

Ein wesentlicher Vorteil für elektrische und hydrostatische Differenzial-Antriebe ist die freie Einstellbarkeit von Drehmoment und/oder Drehzahl. Damit kann man z.B. mittels programmierbarer Steuerung verschiedene Regelungsmethoden implementieren bzw. diese gegebenenfalls auch während des Betriebes der Anlage an wechselnde Umgebungs- oder Betriebsbedingungen anpassen.

Fig. 6 zeigt die Kennlinie für das Rotor-Drehmoment abhängig von der Rotor-Drehzahl für eine Windkraftanlage mit Differenzial-Antrieb mit -/+15% Nenn-Drehzahlbereich. Hier sind unterschiedliche Betriebsbereiche bzw. Betriebsarten dargestellt. Die punktierte Linie zeigt die Verhältnisse im Teillastbereich der Anlage. Die strichlierte Linie zeigt eine gemäß Stand der Technik typische Kennlinie für konstante Leistungs-Regelung im Nennlastbereich. Die dritte Linie zeigt erfindungsgemäß die Drehmomente bei sogenannter progressiver Drehmomentregelung. Hier wird für den Nennlastbereich eine Kennlinie mit einem mit der Rotor-Drehzahl ansteigenden Rotor-Drehmoment eingestellt, welche im gezeigten Beispiel eine Drehmomentsteigung von m = 5% hat. Der Wert für die Drehmomentsteigung (m) errechnet sich aus der prozentualen Steigung des Rotor-Drehmomentes zwischen Rotor-Nenndrehzahl und max. Rotor-Drehzahl des Regelungs-Drehzahlbereiches. Der Vollständigkeit halber sei hier erwähnt, dass auch jede andere beliebige Kennlinie für die Drehmomentsteigung eingestellt, bzw. diese im Betrieb an die Umgebungs- und/oder Betriebsbedingungen angepasst werden kann. Für Anwendungen mit einem Nenn-Drehzahlbereich größer -/+15% liefert bereits eine reduzierte Drehmomentsteigung von z.B. m = 3% gute Resultate, für Anwendungen mit einem sehr kleinen Nenn-Drehzahlbereich ist eine Drehmomentsteigung von m = 10% zu empfehlen.

Da für den Differenzial-Antrieb ein konstantes Verhältnis zwischen Rotor-Drehmoment und Drehmoment am Differenzial-Antrieb besteht, gelten für den Differenzial-Antrieb die gleichen Bedingungen wir für den Rotor. Auf den ersten Blick scheint es hier im Bezug auf das maximal notwendige Drehmoment keinen wesentlichen Unterschied zwischen den beiden Regelungsarten im Nennlastbereich zu geben. In Fig. 6 ist eine vertikale Linie bei 10,9 $min^{-1}$ eingefügt, welche die Grunddrehzahl des Rotors markiert. Differenzial-Antriebe, sei es elektrisch oder auch hydraulisch, können jedoch wie schon weiter oben erwähnt bei Drehzahl gleich Null nur das Stillstandsmoment erzeugen, welches deutlich unter dem Nennmoment liegt. Um im Bereich einer Drehzahl gleich Null das Nennmoment leisten zu können muss daher der Differenzial-Antrieb um ca. 25% überdimensioniert werden. Dieser Wert verringert sich mit zunehmendem Abstand der Drehzahl des Differenzial-Antriebes von der Drehzahl gleich Null. Im gezeigten Fall gemäß Fig. 6 heißt das, dass das erforderliche Auslegungs-Drehmoment des Differenzial-Antriebes für die minimale Rotor-Drehzahl im Regelungs-Drehzahlbereich ca. 10% über dem erforderlichen Antriebs-Drehmoment liegen muss. Da jedoch im gezeigten Beispiel die Drehmomentsteigung über den gesamten Regelungs-Drehzahlbereich ebenfalls 10% (-/+5%) beträgt, ergibt sich für den Differenzial-Antrieb für beide Eckpunkte des Regelungs-Drehzahlbereiches das gleiche erforderliche Auslegungs-Drehmoment.

Hingegen liegt bei dem gezeigten Regelungs-Drehzahlbereich von -/+6% und bei NennlastRegelung mit konstanter Leistung das für den Differenzial-Antrieb erforderliche Auslegungs-Drehmoment um ca. 11 % höher als bei progressiver Drehmomentregelung. Dies wiederum führt für den Differenzial-Antrieb zu höheren Kosten und größerem Massenträgheitsmoment mit einem wesentlichen Nachteil in Bezug auf erzielbare Regelungsdynamik.

Der gezeigte Effekt verstärkt sich mit kleiner werdendem Nenn-Drehzahlbereich, mit einem maximalen Effekt für einen Nenn-Drehzahlbereich von ca. -/+12,5%. Für Nenn-Drehzahlbereiche größer -/+20% ist kaum mehr ein diesbezüglicher Vorteil erkennbar.

Ein weiterer Vorteil der progressiven Drehmomentregelung ist der sich dadurch ergebende Effekt der passiven Drehmomentdämpfung. Eine Windkraftanlage ist eine dynamisch äußerst komplexe Maschine. Dies bewirkt, dass im Triebstrang ständig unterschiedliche Frequenzen angeregt werden, welche negative Auswirkungen auf Stromqualität und Belastung der gesamten Windkraftanlage haben. Gemäß Stand der Technik ist es daher üblich, eine sogenannte aktive Triebstrangdämpfung zu implementieren, welche beispielsweise folgendermaßen funktioniert. Im Triebstrang werden das Drehmoment und/oder die Drehzahl gemessen. Anschließend wird das Mess-Signal gefiltert, und dem Drehmoment-Sollwert ein entsprechender Wert überlagert, welcher den unerwünschten Schwingungen entgegenwirkt. Das dazu erforderliche zusätzliche Drehmoment liegt üblicherweise im Bereich von bis zu ca. 5% des Nenn-Drehmomentes. Implementiert man nun anstelle der aktiven Triebstrangdämpfung eine progressive Drehmomentregelung, so zeigt sich, dass diese einen im Vergleich zur NennlastRegelung mit konstanter Leistung dämpfenden Effekt hat. Dies trifft vor allem im Zusammenhang mit der Ausregelung von Drehzahl- bzw. Drehmomentschwankungen bedingt durch Windböen zu.

Fig. 7 zeigt nun einen in diesem Zusammenhang ebenfalls wichtigen Effekt. Grundsätzlich hängt das Regelungsverhalten einer Windkraftanlage sehr stark mit deren Drehzahlspreizung $s_{ges}$ und in weiterer Folge mit dem Verhältnis der Massenträgheitsmomente von Rotor $J_R$ und Differenzial-Antrieb $J_{DA}$ zusammen.

Die Drehzahlspreizung $s_{ges}$ ist das Verhältnis des Drehzahlbereiches des Differenzial-Antriebes zum Drehzahlbereich des Rotors der Windkraftanlage ($s_{ges}$ = Drehzahlbereich DifferenzialAntrieb / Drehzahlbereich Rotor), wobei die Drehzahlbereiche durch die Rotordrehzahlen $n_{min}$ und $n_{max}$ (vergl. Fig. 4) bzw. die daraus resultierenden Drehzahlen des Differenzial-Antriebes bestimmt werden. Da einerseits die Drehzahlspreizung $s_{ges}$ ein Maß für das Übersetzungsverhältnis zwischen Rotor und Differenzial-Antrieb ist, und andererseits das auf den Rotor bezogene Massenträgheitsmoment des Differenzial-Antriebes mit dem Übersetzungsverhältnis zum Quadrat wirkt, errechnet sich das (für ein gutes Regelungsverhalten einer Windkraftanlage mit elektrischem Differenzial-Antrieb) erlaubte maximale Massenträgheitsmoment für den Differenzial-Antrieb $J_{DA, max}$ wie folgt:

$$J_{DA, max} = ( J_R / s_{ges}^2 ) * f_A ,$$

wobei $f_A$ ein Applikationsfaktor ist, welcher ein Maß für das Regelungsverhalten der Windkraftanlage ist. Den Diagrammen in Fig. 7 wurde ein Applikationsfaktor von $f_A$ = 0,20 zugrunde gelegt, womit gute Ergebnisse bezüglich Regelungsverhalten erzielt werden (vergl. hierzu auch Fig. 8). Grundsätzlich ist festzustellen, dass mit kleiner werdendem $f_A$ noch bessere Resultate erzielt werden können, wobei für Anwendungen mit einem $f_A$ < ca. 0,15 ein zusätzlicher Mehraufwand bezüglich Reduktion der Masse des Rotors des Differenzial-Antriebes notwendig wird.

Fig. 7 zeigt für verschiedene Antriebs- Varianten (mit Nenndrehzahlen des Differenzial- Antriebes von 1000 $min^{-1}$, 1250 $min^{-1}$ und 1500 $min^{-1}$, Rotor- Drehzahlbereiche von- / +10%, 15% und 20% bzw. Windkraftanlagen- Nennleistungen von 3MW und 5MW) und $f_A$ = 0, 20 das maximal erlaubte Massenträgheitsmoment $J_{DA,max}$" des Differenzial-Antriebes und das "Verhältnis $J_{DA,max}/M_{Nenn}$", wobei $M_{Nenn}$ das erforderliche Nenn- Drehmoment des Differenzialantriebes ist. Weiters zeigt Fig. 7 das typische Verhältnis von Massenträgheitsmoment zu Nennmoment von üblichen Servoantrieben gemäß Stand der Technik ("typisches Verhältnis von $J_{DA}/M_{Nenn}$") . Es ist eindeutig erkennbar, dass Differenzial- Antriebe für ein ausreichend gutes Regelungsverhalten der Windkraftanlage, ein kleineres Verhältnis von $J_{DA}/M_{Nenn}$ notwendig machen, als dies bei üblichen Servoantrieben zu finden ist.

Fig. 8 zeigt den Einfluss unterschiedlicher Drehmoment- Steigungen (m = 0% und m = 5%) und Massenträgheitsmomente des Differenzial- Antriebes auf dessen Drehzahl- / Regelungsverhalten nach einem Leistungssprung der Windkraftanlage aufgrund z.B. einer Windböe. So bewirkt ein Leistungssprung der Windkraftanlage mit einem $J_{DA,max}$= $(J_R/s_{ges}^2)$ *$f_A$ mit $f_A$ = 0, 20 und m = 0%, dass die Drehzahl des Differenzial- Antriebes mit einer Amplitude von Anfangs ca. 15 $min^{-1}$ (das sind ca. 1, 6% der sich zu diesem Zeitpunkt einstellenden mittleren Drehzahl) zu schwingen beginnt, und diese Amplitude nur langsam kleiner wird. Eine deutliche Verbesserung zeigt sich bereits bei $f_A$ = 0, 20 und m = 5%, das heißt mit passiven Drehmomentdämpfung. Die sich anfangs einstellende Amplitude ist ca. 10 $min^{-1}$ und nimmt rasch ab. Reduziert man darüber hinaus noch $f_A$ auf 0, 15 so ergibt sich eine anfängliche Amplitude von ca. 5 $min^{-1}$ (das sind ca. 0, 6% der sich zu diesem Zeitpunkt einstellenden mittleren Drehzahl), welche ebenfalls schnell ausklingt. Eine weitere Verringerung des Applikationsfaktors auf z.B. $f_A$ = 0, 10 bringt eine weitere, für hochdynamische Anwendungen notwendige Verbesserung, ist jedoch wie schon oben erwähnt mit stark zunehmenden Fertigungskosten für den Rotor des Differenzial- Antriebes verbunden. Grundsätzlich kann festgestellt werden, dass eine Anlagenkonfiguration mit $f_A$ = 0, 15 und m = 5%, ein für Standardanwendungen ausreichend gutes Ergebnis liefert.

Ergänzend sei hier erwähnt, dass schon eine positive Leistungssteigung im Vergleich zu einer gemäß Stand der Technik typischen Regelung mit konstanter Leistung im Nennlastbereich eine Verbesserung im Hinblick auf Baugröße des Differenzial-Antriebes und Drehmomentdämpfung bewirkt, diese jedoch geringer ausfällt als mit positiver Drehmomentsteigung. Dabei wird für den Nennlastbereich eine Kennlinie mit einer mit der Rotor-Drehzahl ansteigenden Rotorleistung eingestellt. Der Wert für die Kennlinie der Leistungssteigung errechnet sich in diesem Fall aus der prozentualen Steigung der Rotorleistung zwischen Rotor-Nenndrehzahl und max. Rotor-Drehzahl des Regelungs-Drehzahlbereiches.

Fig. 9 zeigt eine mögliche Ausführungsvariante einer Differenzialstufe. Der Rotor 1 treibt das Hauptgetriebe 2 an und dieses über Planetenträger 12 die Differenzialstufe 11 bis 13. Der Generator 8 ist mit dem Hohlrad 13 verbunden und das Ritzel 11 mit dem Differenzial-Antrieb 6. Das Differenzialgetriebe ist 1-stufig, und der Differenzial-Antrieb 6 ist in koaxialer Anordnung sowohl zur Abtriebswelle des Hauptgetriebes 2, als auch zur Antriebswelle des Generators 8. Beim Generator 8 ist eine Hohlwelle vorgesehen, welche erlaubt, dass der Differenzial-Antrieb an der dem Differenzialgetriebe abgewandten Seite des Generators 8 positioniert wird. Dadurch ist die Differenzialstufe vorzugsweise eine separate, an den Generator 8 angebundene Baugruppe, welche dann vorzugsweise über eine Kupplung 14 und eine Bremse 15 mit dem Hauptgetriebe 2 verbunden ist. Die Verbindungswelle 16 zwischen Ritzel 11 und Differenzial-Antrieb 6 kann vorzugsweise in einer besonders Massenträgheitsmoment-armen, drehsteifen Ausführungsvariante als z.B. Faserverbund-Welle mit Glasfaser und/oder Kohlefaser ausgeführt sein.

Wesentliche Vorteile der gezeigten koaxialen, 1-stufigen Ausführungsform sind (a) die konstruktive Einfachheit und die Kompaktheit des Differenzialgetriebes, (b) der dadurch hohe Wirkungsgrad des Differenzial-Getriebes und (c) das, durch das relativ geringe Übersetzungsverhältnis des Differenzialgetriebes, verhältnismäßig geringe auf den Rotor 1 bezogene Massenträgheitsmoment des Differenzial-Antriebes 6. Darüber hinaus kann das Differenzialgetriebe als separate Baugruppe gefertigt und unabhängig vom Hauptgetriebe implementiert und gewartet werden. Der Differenzial-Antrieb 6 kann natürlich auch durch einen hydrostatischen Antrieb ersetzt werden, wozu jedoch ein zweites, mit dem hydrostatischen Differenzial-Antrieb in Wechselwirkung stehendes Pumpenelement durch vorzugsweise der mit dem Generator 8 verbundenen Getriebe-Abtriebswelle angetrieben werden muss.

Betrachtet man jedoch in diesem Zusammenhang die Drehmomentlinie $M_{max}$, aus Fig. 4, kann man folgende Einschränkung erkennen. Bei Verwendung eines einstufigen Differenzialgetriebes kann die Drehzahl und demzufolge das erforderliche Drehmoment für den Differenzial-Antrieb nicht frei gewählt werden, sondern es ergibt sich aus der sinnvoll realisierbaren Standübersetzung $i_{0Z}$ einer Planetenstufe und der Synchrondrehzahl des Generators. Andererseits wachsen mit der Standübersetzung auch der minimal realisierbare Durchmesser einer Planetenstufe und demzufolge auch deren Herstellkosten. Zusammenfassend ist festzustellen, dass für Differenzialsysteme mit konventionellem, einstufigem Planetengetriebe und kleinem Nenn-Drehzahlbereich primär die Standübersetzung entsprechend hoch gewählt werden muss, um für den Differenzial-Antrieb ein möglichst kleines Nennmoment zu erreichen. Dies wiederum bedingt jedoch ein für das Hauptgetriebe ungünstig hohes Übersetzungsverhältnis, wodurch bei Groß-Windkraftanlagen mit niedriger Rotor-Nenndrehzahl und schnelllaufendem Synchrongenerator eine Auslegung mit maximal 3 Getriebestufen für das Hauptgetriebe nur mehr sehr aufwändig zu realisieren ist.

Fig. 10 zeigt die erfindungsgemäße Variante einer Differenzialstufe mit Stufenplanet. Wie schon in Fig. 9 wird auch hier der Differenzial-Antrieb 6 vom Ritzel 11 via Verbindungswelle 16 angetrieben. Das Ritzel 11 ist vorzugsweise via Verbindungswelle 16 im Bereich des sogenannten ND-Endes des Generators 20 einfach gelagert, die Verbindungswelle kann aber z.B. in der Generatorwelle auch zweifach gelagert sein. Der Synchrongenerator besteht aus einem Stator 18 und einem Rotor 17 mit ausgeführter Hohlwelle, welcher vom Hohlrad 13 angetrieben wird. Die im Planetenträger 12 gelagerten Planeten - vorzugsweise drei an der Zahl - sind sogenannte Stufenplaneten 19. Diese bestehen jeweils aus zwei drehfest verbunden Zahnrädern mit unterschiedlichem Durchmesser und vorzugsweise unterschiedlicher Verzahnungsgeometrie. Das Hohlrad 13 ist im gezeigten Beispiel mit dem im Durchmesser kleineren Zahnrad des Stufenplaneten 19 im Eingriff, und das Ritzel 11 mit dem zweiten Zahnrad des Stufenplaneten 19. Da via Hohlrad 13 wesentlich höhere Drehmomente übertragen werden müssen als via Ritzel 11, ist die Zahnbreite für dieses wesentlich größer als die für das Ritzel 11. Dementsprechend gestalten sich auch die Zahnbreiten der Stufenplaneten 19. Aus Gründen der Lärmreduktion kann die Verzahnung des Differenzialgetriebes als Schrägverzahnung ausgeführt werden. Die dadurch entstehenden Axialkräfte, welche von der Lagerung der Verzahnungsteile aufgenommen werden müssen, können durch gegensinnige Schrägstellung der Verzahnung der beiden Zahnräder der Stufenplaneten 19, abhängig von den individuell gewählten Schrägstellungswinkeln, reduziert werden. Vorzugsweise werden die individuellen Schrägungswinkel der Verzahnungsteile des Stufenplaneten so gewählt, dass keine resultierende Axialkraft auf die Lagerung des Stufenplaneten mehr wirkt.

Durch Einsatz von Stufenplaneten, ergibt sich ein zusätzlicher Freiheitsgrad für die Wahl der Nenndrehzahl des Differenzial-Antriebes, ohne die Zahl der Wirkungsgrad-bestimmenden Zahneingriffe zu erhöhen. Dadurch kann man in weiterer Folge das Grund-Übersetzungsverhältnis zwischen der Drehzahl des Steges und der des Hohlrades (ist gleich Generatordrehzahl) der Planetenstufe reduzieren, und damit den die Hauptlast tragenden Teil des Differenzialgetriebes wesentlich kleiner und kostengünstiger herstellen, ohne die Nenndrehzahl des Differenzial-Antriebes in einen ungünstigen Bereich zu verlagern.

Die folgende Tabelle zeigt die technischen Parameter für eine konventionelle Planetenstufe im Vergleich zu einer Planetenstufe mit Stufenplanet für das Differenzialsystem einer Windkraftanlage mit einer Nennleistung von 5MW. Beide Varianten haben in dem gezeigten Beispiel eine progressive Drehmomentregelung mit m = 5 und einen Nenn-Drehzahlbereich von - /+15%. Das Beispiel zeigt deutlich die Vorteile der Variante mit Stufenplanet in Bezug auf kostenbestimmende Faktoren wie Hohlraddurchmesser und Nenndrehmoment der Differenzialstufe.

| technische Parameter | konventionelle Planetenstufe | Stufenplanet | Abweichung |
|---|---|---|---|
| Rotor-Nennleistung [kW] | 5.500 | 5.500 | 0% |
| Rotor-Nenndrehzahl [$min^{-1}$] | 11,8 | 11,8 | 0% |
| minimale Rotor-Drehzahl [$min^{-1}$] | 7,9 | 7,9 | 0% |
| Generatordrehzahl [$min^{-1}$] | 1.000 | 1.000 | 0% |
| Nenndrehzahl Differenzial-Antrieb [$min^{-1}$] | 900 | 1.500 | 67% |
| Nenndrehmoment Differenzial-Antrieb [kNm] | 8,5 | 5,1 | -40% |
| primäre Standübersetzung Differenzialstufe [-] | 6,0 | 4,7 | -22% |
| minimal erforderlicher Hohlrad-Durchmesser [mm] | 500 | 350 | -30% |
| erforderliches Übersetzungsverh. Hauptgetriebe [-] | 78,8 | 83,6 | 6% |
| Nenndrehzahl des Planetenträgers [$min^{-1}$] | 930 | 986 | 6% |

Fasst man nun die Vorteile aus Differenzialgetriebe mit Stufenplanet und progressiver Drehmomentregelung zusammen, so ergibt sich, im Vergleich zu einer Anlage mit konventioneller Planetenstufe und Nennlastregelung mit konstanter Leistung, ein für den Differenzial-Antrieb ca. 40% niedrigeres erforderliches Nenn-Drehmoment.

Andererseits bewirkt ein einstufiges Differenzialgetriebe mit Stufenplanet, dass die Nenndrehzahl des Differenzial-Antriebes höher wird, was zwar für den Differenzial-Antrieb ein niedrigeres erforderliches Nennmoment ermöglicht, jedoch andererseits die Drehzahlspreizung $s_{ges}$ erhöht. Da nun $s_{ges}$ quadratisch in die Berechnungsformel für $J_{DA,\ max}$ eingeht, das Massenträgheitsmoment im Falle einer Standardauslegung des Differenzial-Antriebes grundsätzlich jedoch mehr oder weniger proportional zum Nenn-Drehmoment ist, ist für die Auslegung des Differenzial-Antriebes im Bezug auf dessen Massenträgheitsmoment $J_{DA,\ max}$, ein möglichst kleiner Applikationsfaktor $f_A$ zu berücksichtigen, um ein akzeptables Regelungsverhalten der Windkraftanlage zu gewährleisten.

## Patentansprüche

1. Energiegewinnungsanlage, insbesondere Windkraftanlage, mit einer Antriebswelle, einem Generator (8) und mit einem Differenzialgetriebe (11 bis 13) mit drei An- bzw. Abtrieben, wobei ein erster Antrieb mit der Antriebswelle, ein Abtrieb mit einem Generator (8) und ein zweiter Antrieb mit einem Differenzial-Antrieb (6) verbunden ist, wobei das Differenzialgetriebe (11 bis 13) ein Planetengetriebe mit Planetenrädern (19) ist, **dadurch gekennzeichnet, dass** die Planetenräder (19) jeweils zwei Zahnräder aufweisen, welche miteinander drehfest verbunden sind und unterschiedliche Teilkreisdurchmesser aufweisen.

2. Energiegewinnungsanlage nach Anspruch 1, **dadurch gekennzeichnet, dass** die beiden Zahnräder eine gegensinnige Schrägstellung der Verzahnung aufweisen.

3. Energiegewinnungsanlage nach Anspruch 1 oder 2, **dadurch gekennzeichnet, dass** der Differenzial-Antrieb (6) mit dem Sonnenrad (11) des Differenzialgetriebes (11 bis 13) verbunden ist und dass der Differenzial-Antrieb (6) auf der vom Differenzialgetriebe (11 bis 13) abgewandten Seite des Generators (8) angeordnet ist.

4. Energiegewinnungsanlage nach einem der Ansprüche 1 bis 3, **dadurch gekennzeichnet, dass** der Differenzial-Antrieb (6) koaxial zur Welle des Generators (8) angeordnet ist.

5. Energiegewinnungsanlage nach einem der Ansprüche 1 bis 4, **dadurch gekennzeichnet, dass** sie nur eine Differenzialstufe (11 bis 13) aufweist.

6. Energiegewinnungsanlage nach einem der Ansprüche 1 bis 5, **dadurch gekennzeichnet, dass** sie ein einstufiges Differenzialgetriebe (3) aufweist.

7. Energiegewinnungsanlage nach einem der Ansprüche 1 bis 5, **dadurch gekennzeichnet, dass** sie ein mehrstufiges Differenzialgetriebe (3, 4) aufweist.

8. Energiegewinnungsanlage nach einem der Ansprüche 1 bis 7, **dadurch gekennzeichnet, dass** die Antriebswelle die Rotorwelle einer Windkraftanlage ist.

9. Energiegewinnungsanlage nach einem der Ansprüche 1 bis 8, **dadurch gekennzeichnet, dass** eine Verbindungswelle (16) zwischen dem Ritzel (11) und dem Differenzial-Antrieb (6) als Faserverbund-Welle ausgeführt ist.

10. Energiegewinnungsanlage nach einem der Ansprüche 1 bis 9, **dadurch gekennzeichnet, dass** der Differenzial-Antrieb (6) eine elektrische Maschine ist.

11. Energiegewinnungsanlage nach einem der Ansprüche 1 bis 9, **dadurch gekennzeichnet, dass** der Differenzial-Antrieb (6) ein hydraulischer, insbesondere ein hydrostatischer, Antrieb ist.

12. Energiegewinnungsanlage nach einem der Ansprüche 1 bis 11, **dadurch gekennzeichnet, dass** eine Bremse (15), die auf die Antriebswelle wirkt, auf der Seite des Differenzialgetriebes (11 bis 13) angeordnet ist, auf welcher der erste Antrieb angeordnet ist.

13. Energiegewinnungsanlage nach einem der Ansprüche 1 bis 12, **dadurch gekennzeichnet, dass** das maximale Massenträgheitsmoment des elektrischen Differenzial- Antriebes $J_{DA,max} = (J_R/s_{ges}^2) * f_A$ ist, wobei $f_A \leq 0, 2$, vorzugsweise $\leq 0, 15$, insbesondere $\leq 0, 1$ ist, und wobei $J_R$ das Massenträgheitsmoment des Rotors (1) und $s_{ges}$ eine Drehzahlspreizung ist, welche das Verhältnis des Drehzahlbereiches des Differenzial- Antriebes (6) zum Drehzahlbereich des Rotors (1) ist.

14. Energiegewinnungsanlage nach einem der Ansprüche 1 bis 13, **dadurch gekennzeichnet, dass** die Nenndrehzahl des Differenzial-Antrieb $\geq 1000$ min$^{-1}$, vorzugsweise $\geq 1250$ min$^{-1}$, insbesondere $\geq 1500$ min$^{-1}$ ist.

## Claims

1. Energy production plant, in particular a wind power station, with a drive shaft, a generator (8), and with a differential gear (11 to 13) with three drives or outputs, a first drive being connected to the drive shaft, one output to a generator (8), and a second drive to a differential drive (6), the differential gear (11 to 13) being a planetary gear system with planetary gears (19), **characterized in that** the planetary gears (19) have two gears each that are connected in a torque-proof manner to one another and that have different pitch circle diameters.

2. Energy production plant according to Claim 1, wherein the two gears have an opposite slant position of the toothing.

3. Energy production plant according to Claim 1 or 2, **characterized in that** the differential drive (6) is connected to the sun wheel (11) of the differential gear (11 to 13) and **in that** the differential drive (6) is located on the side of the generator (8) facing away from the differential gear (11 to 13).

4. Energy production plant according to one of Claims 1 to 3, **characterized in that** the differential drive (6) is located coaxially to the shaft of the generator (8).

5. Energy production plant according to one of Claims 1 to 4, **characterized in that** it has only one differential stage (11 to 13).

6. Energy production plant according to one of Claims 1 to 5, **characterized in that** it has a multistage differential gear (3).

7. Energy production plant according to one of Claims 1 to 5, **characterized in that** it has a multistage differential gear (3, 4).

8. Energy production plant according to one of Claims 1 to 7, **characterized in that** the drive shaft is the rotor shaft of a wind power station.

9. Energy production plant according to one of Claims 1 to 8, **characterized in that** a connecting shaft (16) between the pinion (11) and the differential drive (6) is made as a fiber composite shaft.

10. Energy production plant according to one of Claims 1 to 9, **characterized in that** the differential drive (6) is an electrical machine.

11. Energy production plant according to one of Claims 1 to 9, **characterized in that** the differential drive (6) is a hydraulic, especially a hydrostatic, drive.

12. Energy production plant according to one of Claims 1 to 11, **characterized in that** there is a brake (15) that acts on the drive shaft on the side of the differential gear (11 to 13) on which the first drive is located.

13. Energy production plant according to one of Claims 1 to 12, **characterized in that** the maximum mass moment of inertia of the electrical differential drive is $J_{DA,max} = (J_R/s_{ges}^2) *f_A$, where $f_A \leq 0.2$, preferably $\leq 0.15$, especially $\leq 0.1$, and $J_R$ being the mass moment of inertia of the rotor (1) and $s_{ges}$ being a speed distribution that is the ratio of the speed range of the differential drive (6) to the speed range of the rotor (1) .

14. Energy production plant according to one of Claims 1 to 13, **characterized in that** the nominal speed of the differential drive is $\geq 1000$ $min^{-1}$, preferably $\geq 1250$ $min^{-1}$, and especially $\geq 1500$ $min^{-1}$.

## Revendications

1. Installation de production d’énergie, en particulier éolienne, avec un arbre d’entrée, un générateur (8) et avec une transmission différentielle (11 à 13) avec trois entrées ou sorties, une première entrée étant reliée à l’arbre d’entrée, une sortie à un générateur (8) et une deuxième entrée à une entraînement différentielle (6), la transmission différentielle (11 à 13) étant un train planétaire avec des roues planétaires (19), **caractérisée en ce que** les roues planétaires (19) présentent respectivement deux roues dentées, lesquelles sont reliées ensemble de façon solidaire en rotation et présentent différents diamètres primitifs de référence.

2. Installation de production d’énergie selon la revendication 1, **caractérisée en ce que** les deux roues dentées présentent une position en biais en opposition de la denture.

**3.** Installation de production d'énergie selon les revendications 1 ou 2, **caractérisée en ce que** l'entraînement différentielle (6) est relié à la roue solaire (11) de la transmission différentielle (11 à 13) et **en ce que** l'entraînement différentielle (6) est disposée sur le côté du générateur (8) détourné de la transmission différentielle (11 à 13).

**4.** Installation de production d'énergie selon l'une des revendications 1 à 3, **caractérisée en ce que** l'entraînement différentielle (6) est disposée coaxialement à l'arbre du générateur (8).

**5.** Installation de production d'énergie selon l'une des revendications 1 à 4, **caractérisée en ce qu'**elle présente seulement un étage différentiel (11 à 13).

**6.** Installation de production d'énergie selon l'une des revendications 1 à 5, **caractérisée en ce qu'**elle présente une transmission différentielle (3) à un étage.

**7.** Installation de production d'énergie selon l'une des revendications 1 à 5, **caractérisée en ce qu'**elle présente une transmission différentielle (3, 4) à étages multiples.

**8.** Installation de production d'énergie selon l'une des revendications 1 à 7, **caractérisée en ce que** l'arbre d'entrée est l'arbre de rotor d'une éolienne.

**9.** Installation de production d'énergie selon l'une des revendications 1 à 8, **caractérisée en ce qu'**un arbre de conjugaison (16) entre le pignon (11) et l'entraînement différentielle (6) est réalisé en tant qu'arbre renforcé par des fibres.

**10.** Installation de production d'énergie selon l'une des revendications 1 à 9, **caractérisée en ce que** l'entraînement différentielle (6) est une machine électrique.

**11.** Installation de production d'énergie selon l'une des revendications 1 à 9, **caractérisée en ce que** l'entraînement différentielle (6) est une entraînement hydraulique, en particulier hydrostatique.

**12.** Installation de production d'énergie selon l'une des revendications 1 à 11, **caractérisée en ce qu'**un frein (15) agissant sur l'arbre d'entrée est disposé sur le côté de la transmission différentielle (11 à 13) sur lequel est disposée la première entrée.

**13.** Installation de production d'énergie selon l'une des revendications 1 à 12, **caractérisée en ce que** le moment d'inertie de masse maximal de l'entraînement différentielle électrique est de $J_{DA,max}= (J_R/s_{ges}^2) *f_A$, $f_A \leq 0, 2$ étant, de préférence $\leq 0, 15$, en particulier $\leq 0, 1$, et $J_R$ étant le moment d'inertie de masse du rotor (1) et $s_{ges}$ un étalement de régime qui est le rapport entre la plage de vitesse de rotation de l'entraînement différentielle (6) et la plage de vitesse de rotation du rotor (1) .

**14.** Installation de production d'énergie selon l'une des revendications 1 à 13, **caractérisée en ce que** le régime nominal de l'entraînement différentielle est $\geq 1000$ $min^{-1}$, de préférence $\geq 1250$ $min^{-1}$, en particulier $\geq 1500$ $min^{-1}$.

Fig. 1

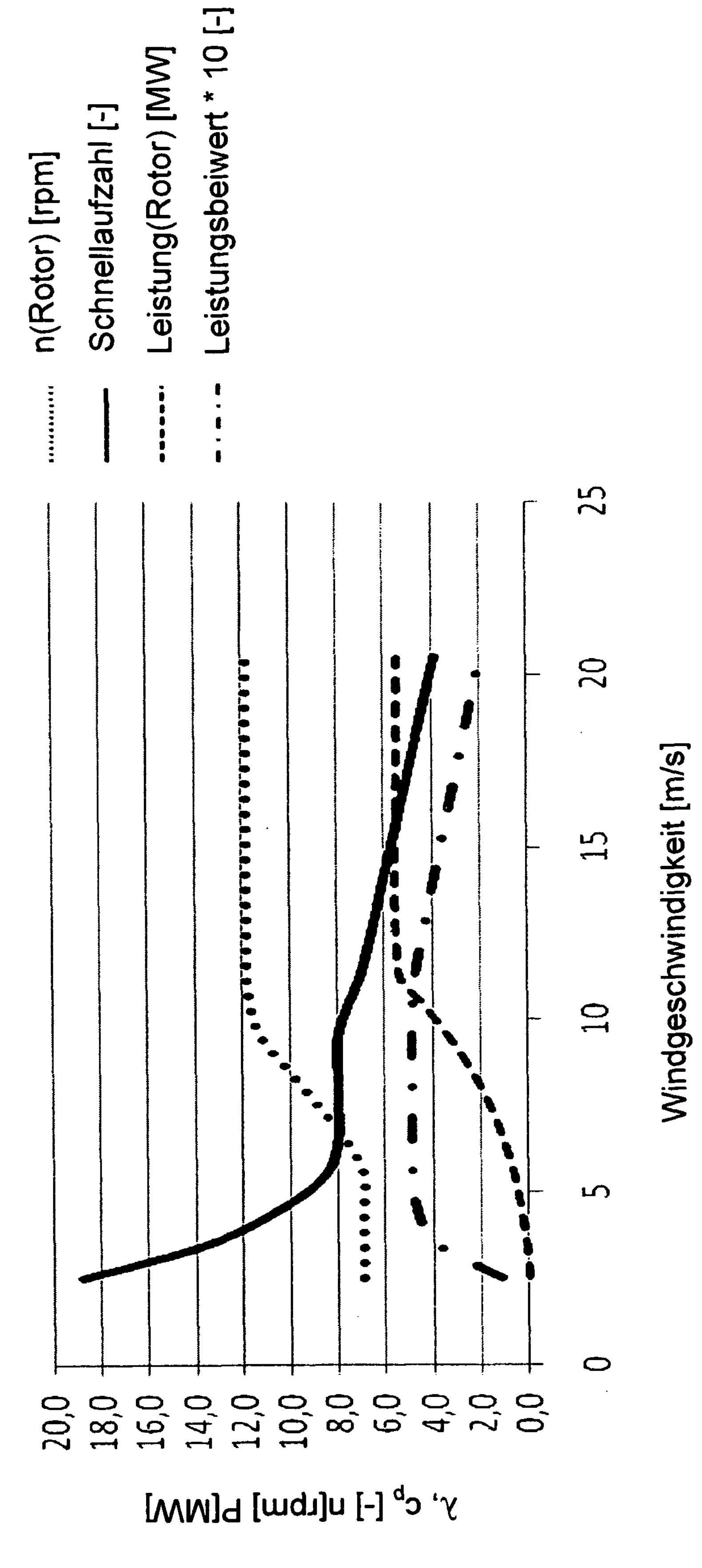
n(Rotor) [rpm]
Schnellaufzahl [-]
Leistung(Rotor) [MW]
Leistungsbeiwert * 10 [-]
λ, $c_p$ [-] n[rpm] P[MW]
20,0
18,0
16,0
14,0
12,0
10,0
8,0
6,0
4,0
2,0
0,0
0
5
10
15
20
25
Windgeschwindigkeit [m/s]

Fig. 2

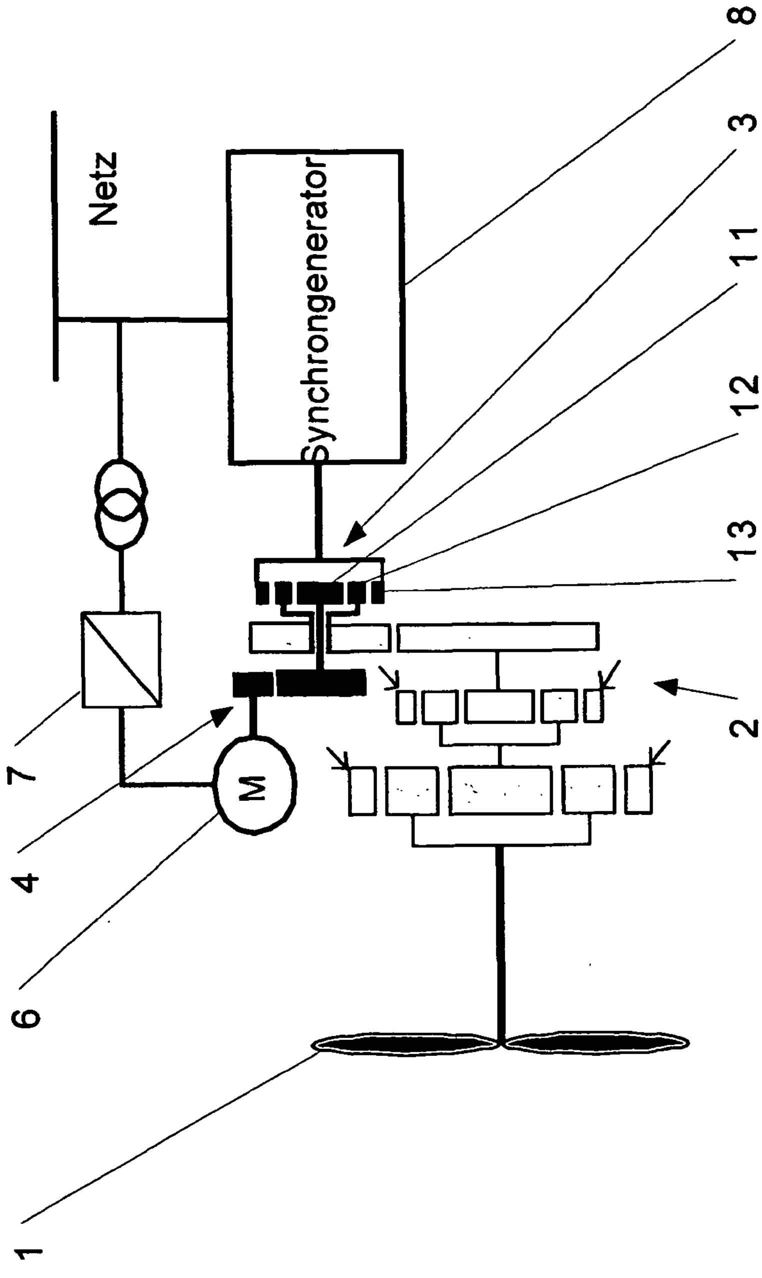

Fig. 3

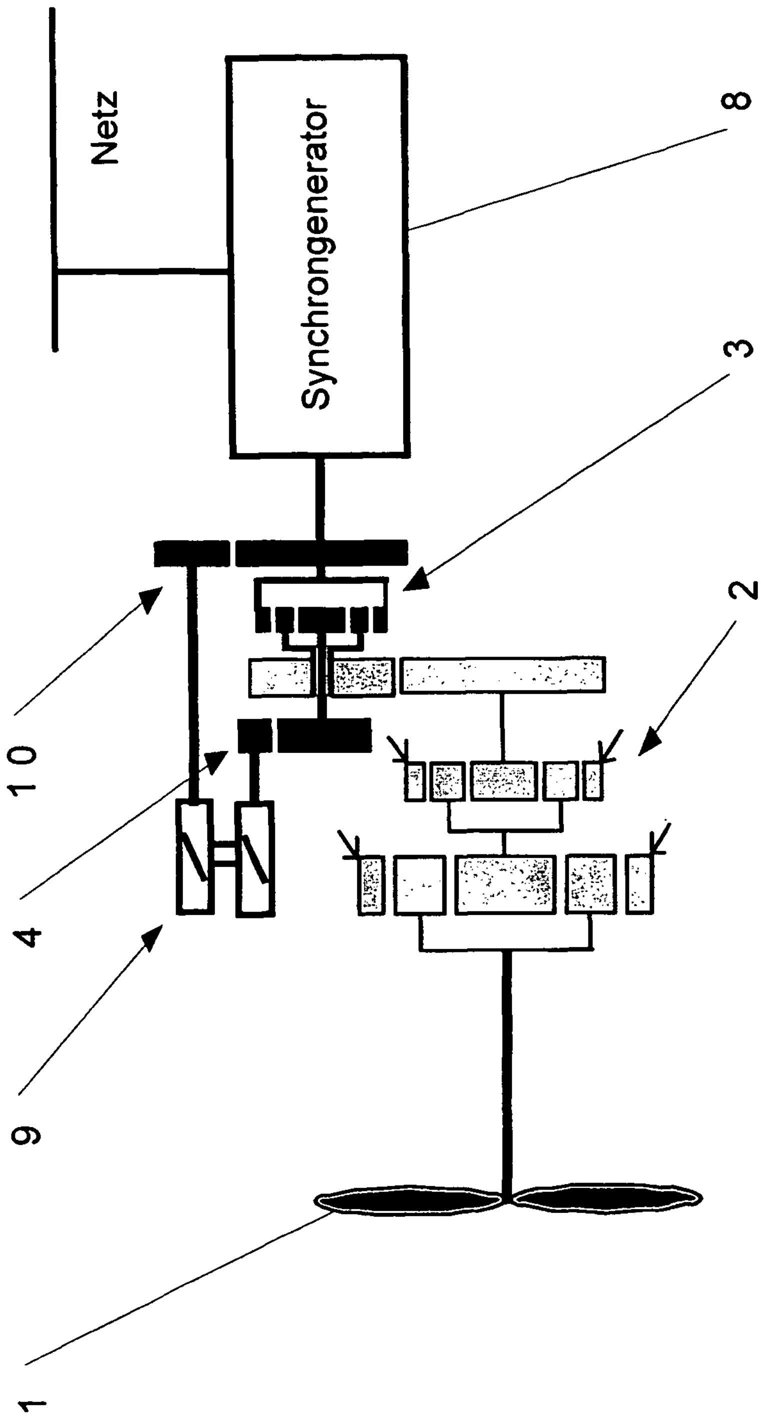

Fig. 4

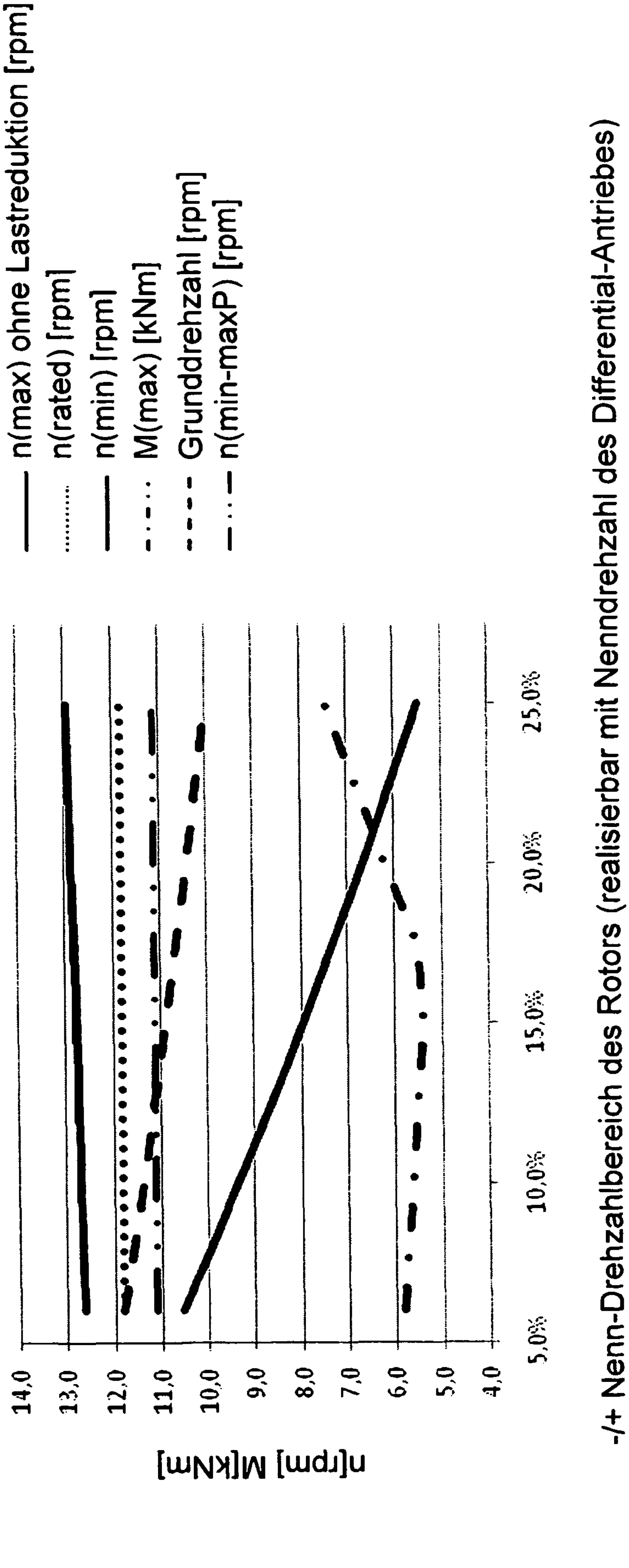
n(max) ohne Lastreduktion [rpm]
n(rated) [rpm]
n(min) [rpm]
M(max) [kNm]
Grunddrehzahl [rpm]
n(min-maxP) [rpm]
n[rpm] M[kNm]
14,0
13,0
12,0
11,0
10,0
9,0
8,0
7,0
6,0
5,0
4,0
5,0%
10,0%
15,0%
20,0%
25,0%
-/+ Nenn-Drehzahlbereich des Rotors (realisierbar mit Nenndrehzahl des Differential-Antriebes)

Fig. 5

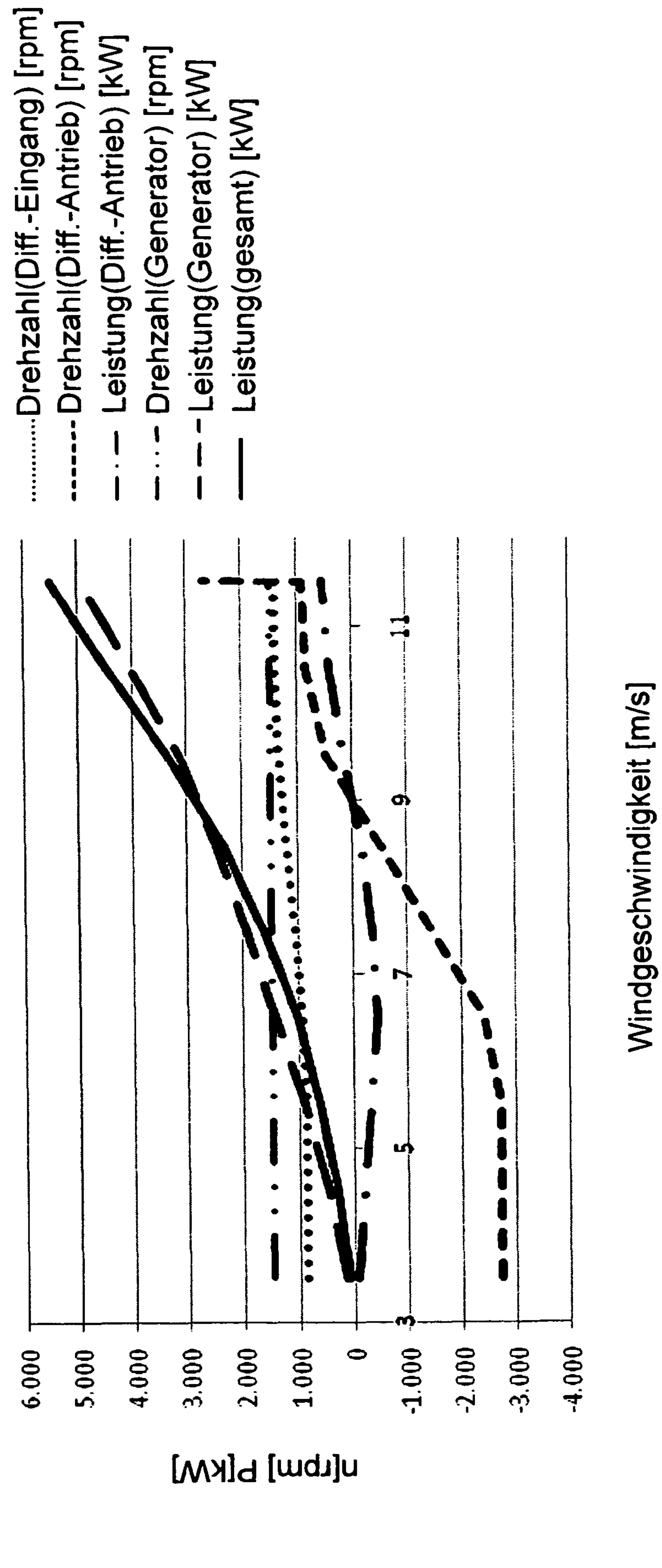
Drehzahl(Diff.-Eingang) [rpm]
Drehzahl(Diff.-Antrieb) [rpm]
Leistung(Diff.-Antrieb) [kW]
Drehzahl(Generator) [rpm]
Leistung(Generator) [kW]
Leistung(gesamt) [kW]
6.000
5.000
4.000
3.000
2.000
1.000
0
-1.000
-2.000
-3.000
-4.000
n[rpm] P[kW]
3
5
7
9
11
Windgeschwindigkeit [m/s]

Fig. 6

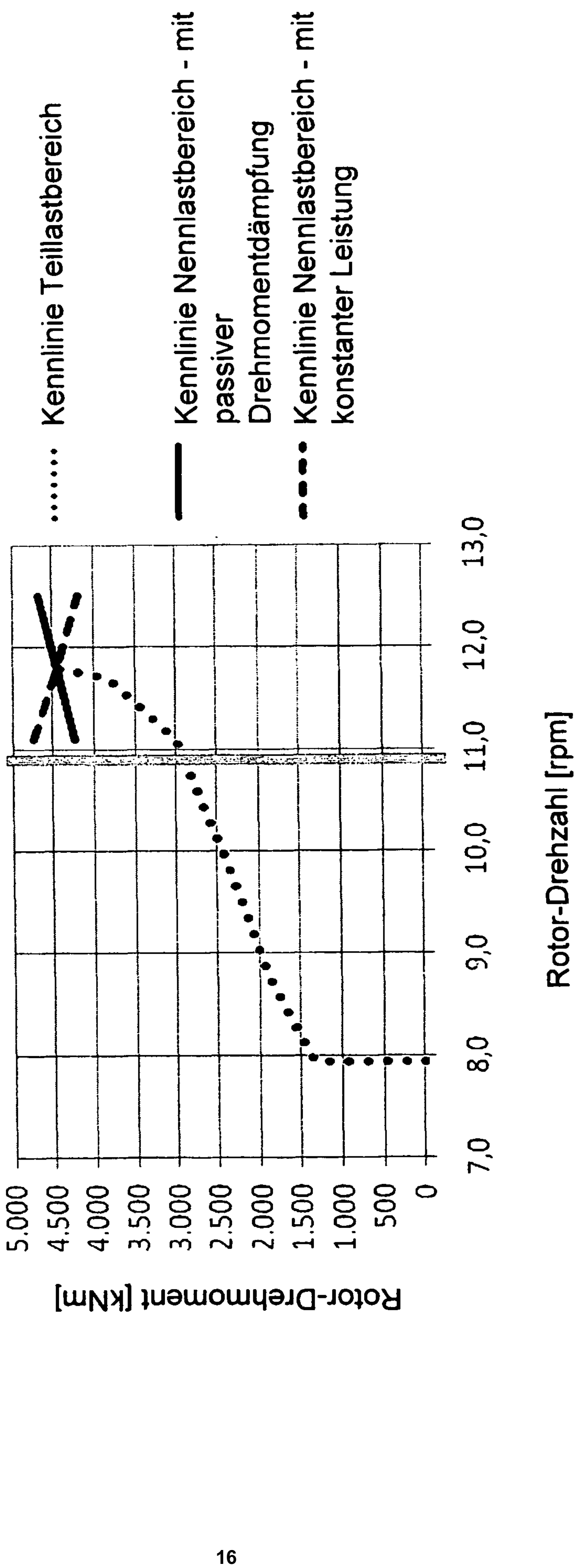
Kennlinie Teillastbereich
Kennlinie Nennlastbereich - mit passiver Drehmomentdämpfung
Kennlinie Nennlastbereich - mit konstanter Leistung
Rotor-Drehmoment [kNm]
5.000
4.500
4.000
3.500
3.000
2.500
2.000
1.500
1.000
500
0
7,0
8,0
9,0
10,0
11,0
12,0
13,0
Rotor-Drehzahl [rpm]

Fig. 7

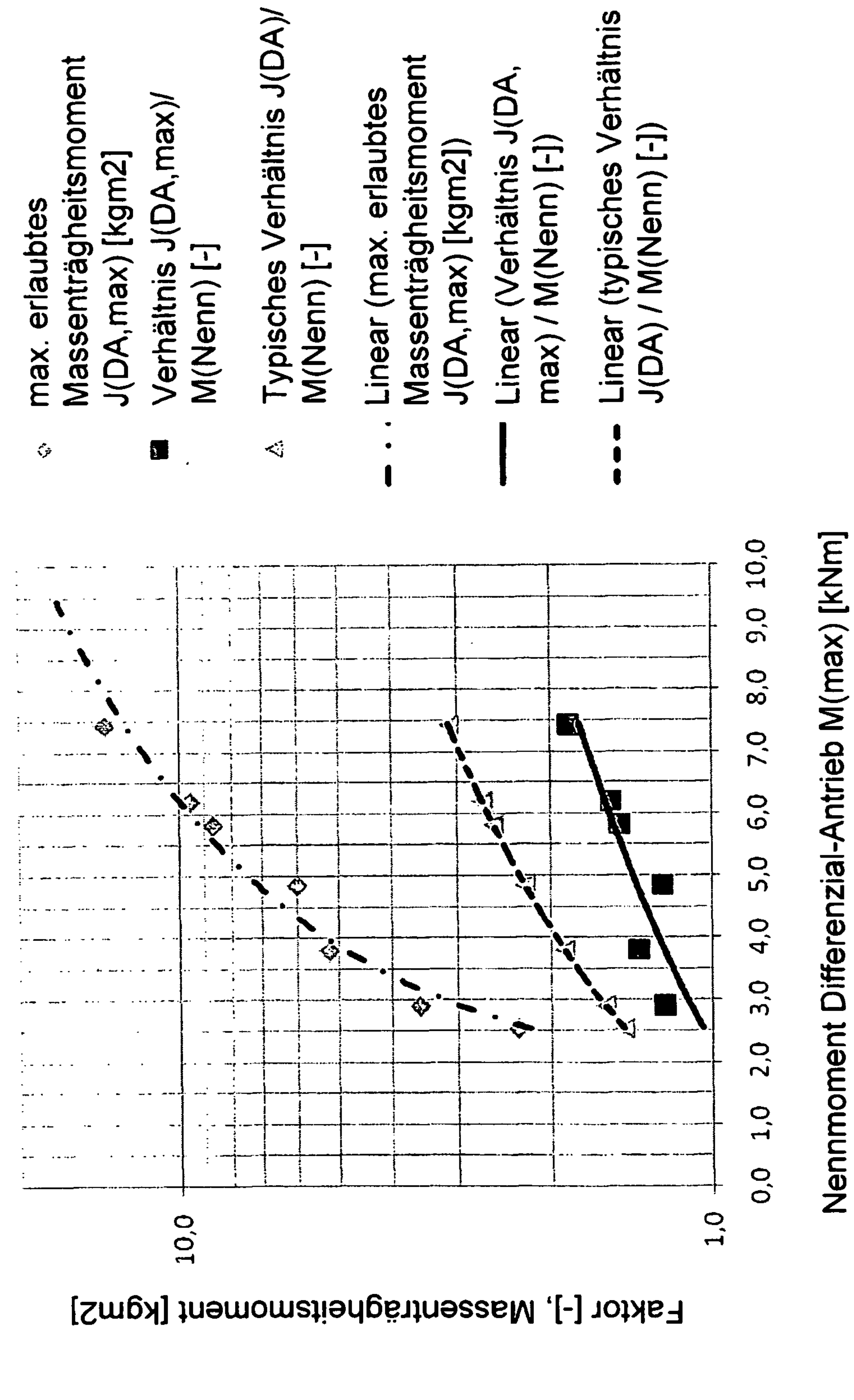
max. erlaubtes Massenträgheitsmoment J(DA,max) [kgm2]
Verhältnis J(DA,max)/ M(Nenn) [-]
Typisches Verhältnis J(DA)/ M(Nenn) [-]
Linear (max. erlaubtes Massenträgheitsmoment J(DA,max) [kgm2])
Linear (Verhältnis J(DA, max) / M(Nenn) [-])
Linear (typisches Verhältnis J(DA) / M(Nenn) [-])
10,0
1,0
Faktor [-], Massenträgheitsmoment [kgm2]
0,0 1,0 2,0 3,0 4,0 5,0 6,0 7,0 8,0 9,0 10,0
Nennmoment Differenzial-Antrieb M(max) [kNm]

Fig. 8

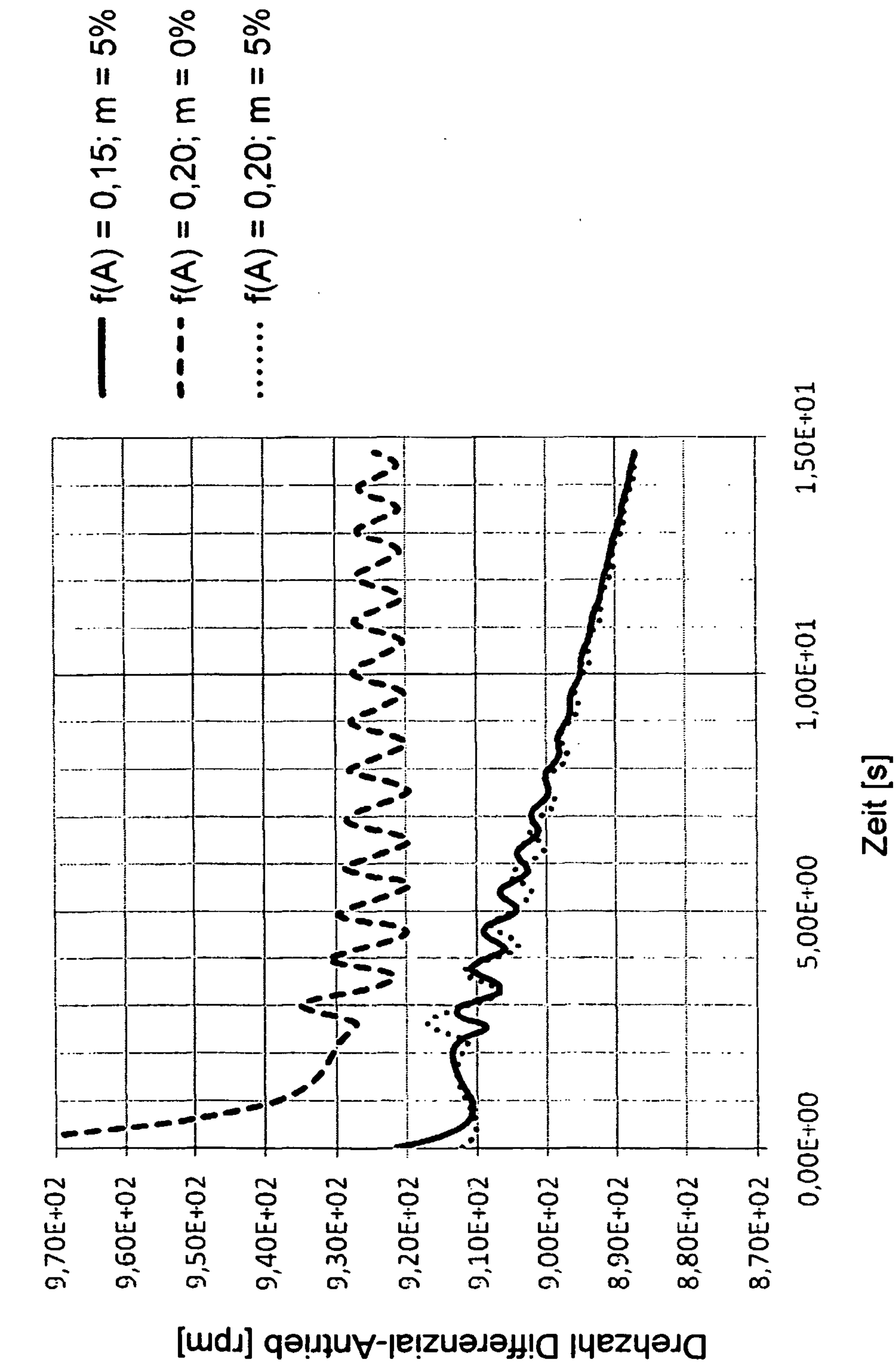
f(A) = 0,15; m = 5%
f(A) = 0,20; m = 0%
f(A) = 0,20; m = 5%
Drehzahl Differenzial-Antrieb [rpm]
9,70E+02
9,60E+02
9,50E+02
9,40E+02
9,30E+02
9,20E+02
9,10E+02
9,00E+02
8,90E+02
8,80E+02
8,70E+02
0,00E+00
5,00E+00
1,00E+01
1,50E+01
Zeit [s]

Fig. 9

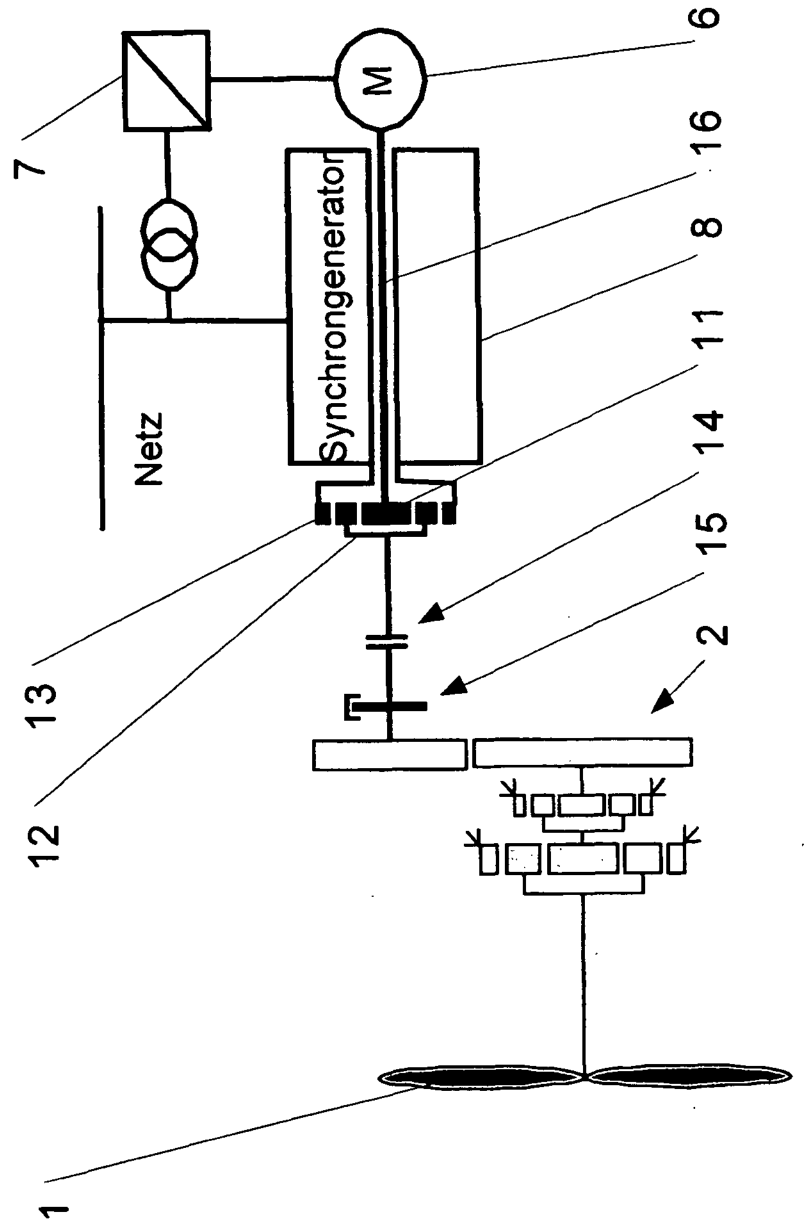

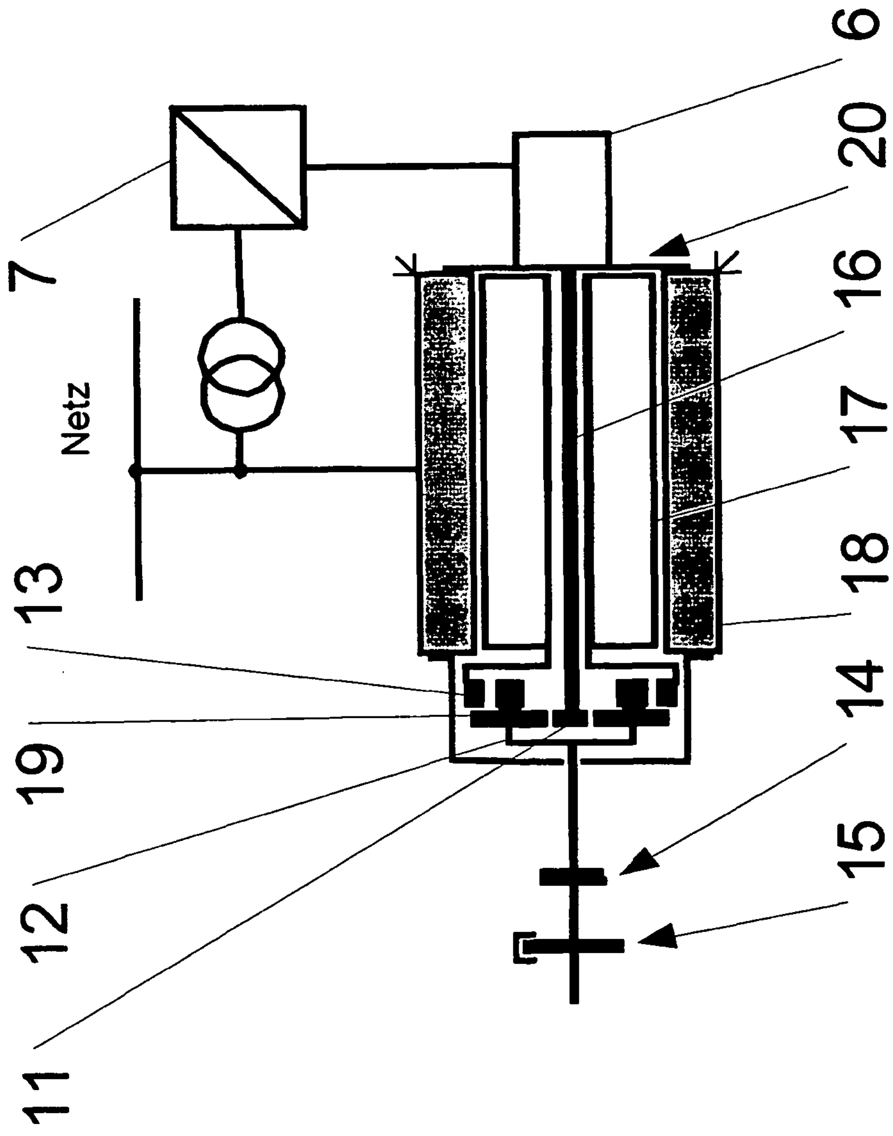


Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2004109157 A1
- EP 1283359 A1